# DEMANDE DE BREVET EUROPEEN

(11) **EP 4 640 501 A1**
(43) Date de publication de la demande: **29.10.2025**
(21) Numéro de dépôt: 25166166.6
(22) Date de dépôt: 25.03.2025
(51) Int. Cl.: B60T 1/04, A01B 69/00, B60R 19/46, B60T 7/22, B60T 8/1755, B60T 17/22, B60W 30/09, B62D 49/06

(54) **SYSTÈME DE PARE-CHOCS POUR UNE ROUE D'ENGIN AGRICOLE**

(30) Priorité: 26.04.2024 FR 2404422
(71) Demandeur: Exel Industries, 51200 Epernay (FR)
(72) Inventeur: BACLE, Thibault, 69003 Lyon (FR); GAUTHIER, Jocelyn, 69009 Lyon (FR)
(74) Mandataire: Bandpay & Greuter

(57) **Abrégé**

La présente invention vise un système de pare-chocs (2) d'un engin (1) agricole, comprenant :
- une plaque (4) en liaison pivot par rapport à un châssis de l'engin (1), mobile entre une position initiale et une position de contact ;
- une barre (6) mobile entre une position initiale et une position d'activation ;
le système de pare-chocs (2) étant configuré de sorte que, dans le cas où la barre (6) entre en contact avec un obstacle, la barre (6) passe de sa position initiale vers sa position d'activation, la barre (6) actionnant un organe de commande configuré pour commander une séquence d'urgence de l'engin (1) agricole, le système de pare-chocs (2) étant en outre configuré de sorte que, dans le cas où la plaque (4) entre en contact avec l'obstacle, la plaque (4) pivote de sa position initiale vers sa position de contact.

## Description

### DOMAINE TECHNIQUE

La présente invention concerne le domaine des engins agricoles, en particulier des engins agricoles autonomes.

Plus précisément, l'invention vise un système de pare-chocs pour des roues de tels engins agricoles.

### ETAT DE LA TECHNIQUE

Il est connu de l'état de la technique un engin agricole, notamment un engin agricole autonome, comprenant au moins un système de pare-chocs configuré pour protéger des composants mécaniques dudit engin ainsi que l'environnement, par exemple une roue ainsi que d'autres composants de la chaîne de traction de l'engin agricole, en cas de collision avec un obstacle. Les systèmes de pare-chocs connus présentent généralement l'inconvénient de manquer de robustesse, notamment en raison de la durée d'une séquence d'urgence comprenant le freinage et l'arrêt de l'engin, puis une manœuvre de dégagement. En effet, à compter de la détection de la collision et en particulier dans le cas d'un engin autonome, le déplacement de l'engin agricole peut être suffisant pour engendrer, au mieux une casse du système de pare-chocs, et parfois une casse des composants mécaniques protégés par le système de pare-chocs.

Pour pallier ce problème, il est notamment connu de limiter la vitesse d'avancement de l'engin agricole, réduisant ainsi nécessairement sa productivité et son efficacité. Il est également connu un engin agricole comprenant un capteur permettant d'anticiper une collision, par exemple au moyen d'un capteur LIDAR. Une telle solution nécessite un pilotage logiciel conséquent, et les normes réglementaires en matière de sécurité ne sont pas aisément satisfaites.

L'invention vise à répondre au moins en partie à ces inconvénients en proposant un système de pare-chocs dont le risque de détérioration est significativement réduit, assurant une meilleure fonction de protection des composants mécaniques d'un engin agricole.

### PRESENTATION DE L'INVENTION

Plus précisément, l'invention a pour objet un système de pare-chocs pour une roue d'un engin agricole, notamment autonome, le système de pare-chocs comprenant :
- une plaque de protection en liaison pivot par rapport à un châssis de l'engin agricole selon un premier axe sensiblement parallèle à un axe de rotation de la roue de l'engin agricole, la plaque de protection étant mobile entre une position initiale dans laquelle la plaque de protection s'étend en avant et à distance de la roue par rapport à une direction d'avancement de l'engin agricole et une position de contact dans laquelle la plaque de protection est en appui contre le pneu de la roue ;
- une barre d'activation mobile entre une position initiale dans laquelle la barre d'activation s'étend en avant et à distance de la plaque de protection par rapport à la direction d'avancement de l'engin agricole et une position d'activation.

Le système de pare-chocs est configuré de sorte que, dans le cas où la barre d'activation entre en contact avec un obstacle et où l'obstacle exerce une force sur la barre d'activation supérieure à un premier seuil, la barre d'activation passe de sa position initiale vers sa position d'activation, la barre d'activation actionnant au passage un organe de commande configuré pour commander une séquence d'urgence de l'engin agricole, comprenant notamment le freinage et l'arrêt automatique de l'engin agricole, le système de pare-chocs étant en outre configuré de sorte que, dans le cas où la plaque de protection entre en contact avec l'obstacle et où l'obstacle exerce une force sur la plaque de protection supérieure à un deuxième seuil, la plaque de protection pivote autour du premier axe de sa position initiale vers sa position de contact

Grâce à une telle combinaison de caractéristiques, un tel système de pare-chocs permet l'activation d'une séquence d'urgence avant tout contact entre la plaque de protection et un obstacle. En outre, le risque de détérioration d'une telle plaque ou des composants mécaniques de l'engin agricole, notamment une roue et la liaison roue-châssis, est sensiblement réduit, en induisant un mouvement de pivotement de la plaque de protection en cas de collision avec un obstacle avant la fin de la séquence d'urgence. Par ailleurs, un tel mouvement de la plaque de protection contribue à une application progressive de l'effort de contact de l'obstacle sur la roue et à l'arrêt de l'engin agricole, permettant d'amortir une partie de l'énergie cinétique issue de la collision.

Avantageusement, la barre d'activation est en liaison pivot par rapport à la plaque de protection selon un deuxième axe sensiblement parallèle à l'axe de rotation de la roue, l'organe de commande comprenant une came, un galet et un interrupteur, la came étant solidaire de la barre d'activation, et configurée de sorte que, lors du pivotement de la barre d'activation de la position initiale à la position d'activation, un pivotement de la came induise un déplacement du galet en direction de l'interrupteur de sorte à déclencher l'interrupteur pour commander la séquence d'urgence de l'engin agricole. Dans une telle configuration, l'interrupteur n'est enclenché que dans le cas où le galet est déplacé par la came, autrement dit lorsque la force exercée par l'objet sur la barre d'activation est suffisante pour faire pivoter la barre d'activation vers la position d'activation. Ainsi, le risque de déclenchement inopportun de la séquence d'urgence, par exemple par de la végétation ou des projections de boue, est sensiblement réduit.

Avantageusement, dans la position d'activation, la barre d'activation s'étend au moins en partie selon une position opposée à la direction d'avancement de l'engin agricole. Dans une telle configuration, le risque de détérioration de la barre d'activation en cas de force trop importante est sensiblement réduit, le contact avec l'obstacle étant rompu une fois le premier seuil dépassé.

Avantageusement, le système de pare-chocs comprend un premier organe de rappel de la barre d'activation, le premier organe de rappel étant configuré pour faire passer la barre d'activation de sa position d'activation vers sa position initiale. Dans une telle configuration, la barre d'activation est configurée pour revenir à sa position initiale, notamment après une manœuvre de dégagement de l'engin agricole par rapport à l'obstacle.

Avantageusement, la barre d'activation est préchargée par l'intermédiaire d'au moins un pion en contact avec une butée dans la position initiale, le contact entre le pion et la butée étant assuré par un effort organe de rappel égal au premier seuil d'activation.

Avantageusement, le système de pare-chocs comprend un deuxième organe de rappel de la plaque de protection, le deuxième organe de rappel étant configuré pour faire pivoter la plaque de protection autour du premier axe, de sa position de contact vers sa position initiale. Dans une telle configuration, la plaque de protection est configurée pour revenir à sa position initiale après une manœuvre de dégagement de l'engin agricole par rapport à l'obstacle.

Avantageusement, la plaque de protection est préchargée par l'intermédiaire d'au moins une chainette en tension mécanique entre deux œillets dans la position initiale, un œillet étant solidaire du châssis de l'engin agricole et l'autre œillet étant solidaire de la plaque de protection.

Avantageusement, la plaque de protection comprend une bordure en saillie dans une direction opposée à la direction d'avancement, la bordure étant configurée pour être en contact avec la roue de l'engin agricole dans la position de contact de la plaque de protection, la bordure délimitant en outre un logement configuré pour recevoir l'organe de commande. Dans une telle configuration, le logement recevant l'organe de commande le protège de l'environnement extérieur, et le risque d'écrasement de l'organe de commande entre la plaque de protection et la roue de l'engin agricole est réduit.

Avantageusement, le premier seuil d'activation est d'au moins 15 N.

Avantageusement, le deuxième seuil d'activation est compris entre 1 et 40 fois le premier seuil d'activation.

Avantageusement, les seuils sont adaptés de sorte que des accélérations verticales et/ou horizontales par rapport au sol, par exemple due à des vibrations ou à des variations abruptes de la topographie lors de l'avancement de l'engin agricole, soient insuffisantes pour déplacer la barre d'activation et la plaque de protection.

Selon un autre aspect de l'invention, celle-ci a trait à un engin agricole, notamment autonome, comprenant un châssis et une pluralité de roues, chaque roue tournant autour d'un axe de rotation de sorte que l'engin agricole se déplace selon une direction d'avancement, l'engin agricole comprenant par ailleurs au moins un système de pare-chocs tel que décrit ci-dessus, recouvrant au moins partiellement une roue de l'engin agricole, chaque système de pare-chocs étant en outre configuré pour commander une séquence d'urgence de l'engin agricole, comprenant notamment le freinage et l'arrêt automatique de l'engin agricole.

L'invention vise également d'autres types de véhicules équipés du pare-chocs selon l'invention tel que brièvement décrit ci-dessus, en particulier des véhicules autonomes tels que des véhicules de transports sans conducteurs, également désignés AGV (pour Automatic Guided Vehicle), des robots mobiles, etc.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en perspective isométrique avant d'une roue d'un engin agricole munie d'un système de pare-chocs selon un premier mode de réalisation de l'invention ;
La figure 2 est une représentation schématique en perspective isométrique arrière du système de pare-chocs de la figure 1, dans une position d'activation d'une barre d'activation dudit système de pare-chocs ;
La figure 3 est une représentation schématique en vue de côté du système de pare-chocs de la figure 1 ;
La figure 4 est une représentation schématique en vue de côté du système de pare-chocs de la figure 1, dans une position d'activation d'une barre d'activation dudit système de pare-chocs et dans une position de contact d'une plaque de protection dudit système de pare-chocs ;

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

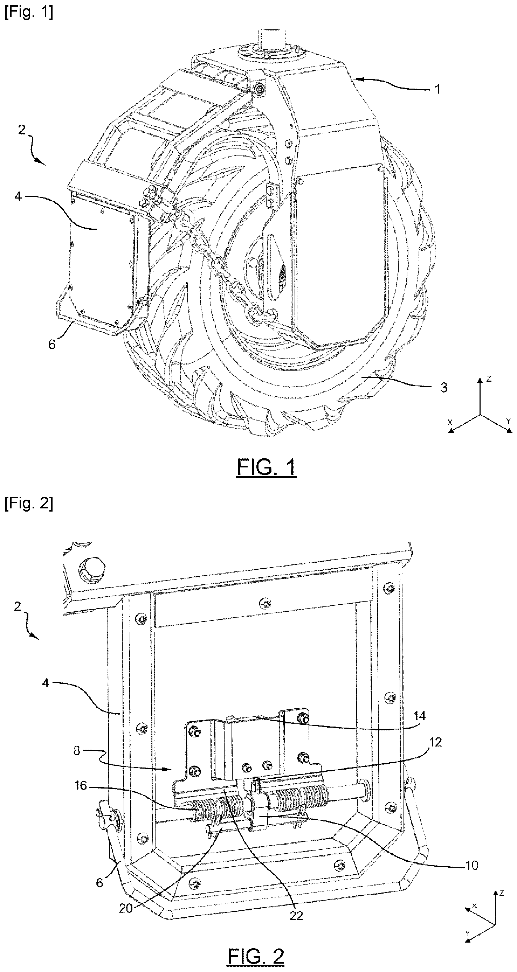

L'invention concerne notamment un engin agricole 1, par exemple un engin agricole autonome. L'engin agricole 1 est par exemple un enjambeur autonome ou non, de cultures végétales, telles que des vignes. L'engin agricole 1 comprend un châssis et une pluralité de roues 3. Chaque roue 3 tourne autour d'un axe de rotation sensiblement parallèle à l'axe transversal Y comme illustré sur la figure 1, de sorte à permettre le déplacement de l'engin agricole 3 selon une direction d'avancement. La direction d'avancement est sur la figure 1 sensiblement parallèle à l'axe longitudinal X. La roue 3 comprend de préférence un pneu.

Au moins une roue 3 de l'engin agricole 1 est, selon un autre aspect de l'invention, recouverte au moins partiellement par un système de pare-chocs 2 tel qu'illustré sur la figure 1. De préférence, chaque roue 3 de l'engin agricole 1 est recouverte au moins partiellement par un système de pare-chocs 2. Le système de pare-chocs 2 est configuré pour protéger la roue 3 de l'environnement extérieur de l'engin agricole 1 et réciproquement l'environnent de la roue, par exemple en cas de collision avec un obstacle.

Le système de pare-chocs 2 comprend ainsi une plaque de protection 4 en liaison pivot par rapport au châssis de l'engin agricole 1, selon un premier axe sensiblement parallèle à l'axe de rotation de la roue 3 de l'engin agricole. La plaque de protection 4 est mobile entre une position initiale dans laquelle la plaque de protection 4 s'étend en avant et à distance de la roue 3 par rapport à la direction d'avancement de l'engin agricole 1 et une position de contact dans laquelle la plaque de protection 4 est en appui contre la roue 3 ou le cas échéant, le pneu de la roue 3.

Le système de pare-chocs 2 comprend par ailleurs une barre d'activation 6 mobile entre une position initiale dans laquelle la barre d'activation 6 s'étend au moins en partie en avant et à distance de la plaque de protection 4 par rapport à la direction d'avancement de l'engin agricole 1 et une position d'activation.

Dans le mode de réalisation illustré, notamment sur la figure 2, la barre d'activation 6 est en liaison pivot par rapport à la plaque de protection 4, selon un deuxième axe sensiblement parallèle à l'axe de rotation de la roue 3 de l'engin agricole 1. Dans une telle configuration, la barre d'activation 6 dans la position d'activation a pivoté d'un angle prédéterminé de sorte que la barre d'activation s'étende au moins orthogonalement par rapport à la direction d'avancement de l'engin agricole 1.

De préférence, la barre d'activation 6 dans la position d'activation a pivoté de sorte que la barre d'activation s'étende au moins en partie selon une direction opposée à la direction d'avancement de l'engin agricole 1. Dans une telle configuration, la barre d'activation 6 est ainsi protégée de l'environnement extérieur dans la position d'activation.

Le système de pare-chocs 2 est configuré de sorte que, dans le cas où la barre d'activation 6 entre en contact avec un obstacle et où l'obstacle exerce une force sur la barrière d'activation 6 supérieure à un premier seuil, la barre d'activation 6 passe de sa position initiale vers sa position d'activation. Dans le mode de réalisation où la barre d'activation 6 est montée pivotante, ladite barre d'activation 6 pivote autour du deuxième axe de la position initiale à la position d'activation. Dans la position d'activation, la barre d'activation 6 actionne un organe de commande 8 configuré pour commander une séquence d'urgence de l'engin agricole 1, comprenant notamment le freinage et l'arrêt automatique de l'engin agricole 1, comme illustré sur la figure 2.

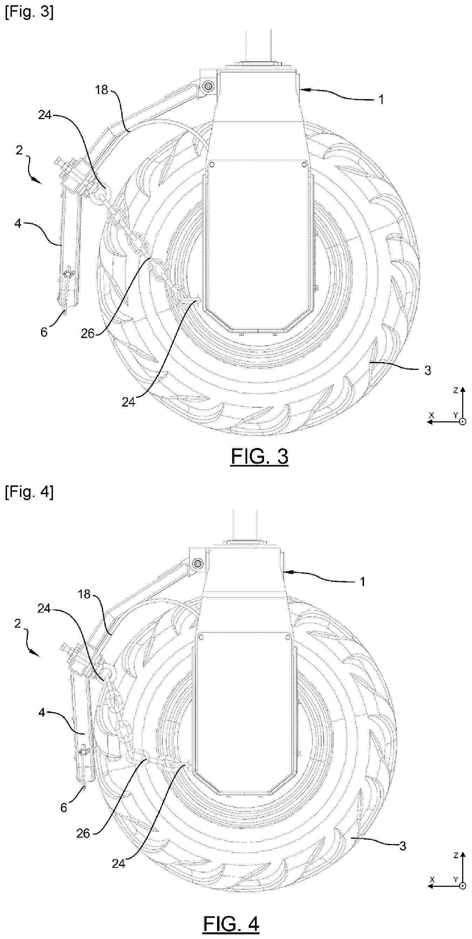

Le système de pare-chocs 2 est en outre configuré de sorte que, dans le cas où la plaque de protection 4 entre en contact avec l'obstacle et où l'obstacle exerce une force sur la plaque de protection 4 supérieure à un deuxième seuil, la plaque de protection 4 pivote autour du premier axe de sa position initiale vers sa position de contact, comme illustré sur la figure 4. Dans un cas idéal, la séquence d'urgence de l'engin agricole 1 est terminée avant que la plaque de protection 4 ne soit arrivée à la position de contact, permettant d'améliorer la durée de vie du système de pare-chocs 2.

De préférence, le premier seuil d'activation est d'au moins 15 N, de préférence encore supérieur à 20 N.

De préférence, le deuxième seuil d'activation est compris entre 1 et 40 fois le premier seuil d'activation

Avantageusement, les seuils sont adaptés de sorte que des accélérations verticales et/ou horizontales par rapport au sol, par exemple due à des vibrations ou à des variations abruptes de la topographie lors de l'avancement de l'engin agricole 1 ou à un contact avec une petite végétation, soient insuffisants pour déplacer la barre d'activation 6 et la plaque de protection 4. Par ailleurs, le deuxième seuil peut être adapté de sorte qu'une partie de la plaque de protection 4 puisse supporter le poids d'un utilisateur sans pivoter et offrir une fonction de marchepied. Le premier seuil est également adapté de sorte qu'en cas de contact avec une personne, l'activation soit réalisée pour prévenir une blessure de ladite personne.

Grâce à une telle combinaison de caractéristiques, un tel système de pare-chocs 2 permet l'activation d'une séquence d'urgence avant tout contact entre la plaque de protection 4 et un obstacle. En outre, le risque de détérioration d'une telle plaque 4 ou des composants mécaniques de l'engin agricole 1, notamment l'une des roues 3, est sensiblement réduit, en induisant un mouvement de pivotement de la plaque de protection 4 en cas de collision avec un obstacle avant la fin de la séquence d'urgence. Par ailleurs, un tel mouvement de la plaque de protection 4 contribue à une application progressive de l'effort de contact de l'obstacle sur la roue et à l'arrêt de l'engin agricole, permettant d'amortir une partie de l'énergie cinétique issue de la collision. Un tel système de pare-chocs 2 permet de s'affranchir de capteurs tels que des capteurs LIDAR, permettant ainsi une réponse simplifiée aux obligations réglementaires du domaine technique.

De manière avantageuse, dans le cas où la roue 3 comprend un pneu, la plaque de protection 4 dans la position de contact est en appui sur le pneu, la raideur du pneu contribuant également à l'amortissement du choc ainsi qu'à la dissipation de l'énergie issue de la collision.

L'organe de commande 8 comprend avantageusement une came 10, un galet 12 et un interrupteur 14, la came étant solidaire de la barre d'activation 6, et configurée de sorte que, lors du pivotement de la barre d'activation 6 de la position initiale à la position d'activation, un pivotement de la came 10 induise un déplacement du galet 12 en direction de l'interrupteur 14, de sorte à déclencher l'interrupteur 14 pour commander le lancement de la séquence d'urgence de l'engin agricole. Dans une telle configuration, l'interrupteur 14 n'est enclenché que dans le cas où le galet 12 est déplacé par la came 10, autrement dit lorsque la force exercée par l'obstacle sur la barre d'activation 6 est suffisante pour faire pivoter la barre d'activation 6. Ainsi, le risque de déclenchement inopportun de la séquence d'urgence, par exemple par de la végétation, est sensiblement réduit.

Dans le mode de réalisation décrit, la plaque de protection 4 comprend une bordure en saillie dans une direction opposée à la direction d'avancement de l'engin agricole 1. La bordure est configurée pour être en contact avec la roue 3 de l'engin agricole 1 dans la position de contact de la plaque de protection 4. La bordure délimite en outre un logement configuré pour recevoir l'organe de commande 8, notamment ici la came 10, le galet 12 et l'interrupteur 14. Le logement recevant l'organe de commande 8 le protège alors de l'environnement extérieur, et le risque d'écrasement de l'organe de commande 8 entre la plaque de protection 4 et la roue 3 de l'engin agricole 1, notamment dans la position de contact de la plaque de protection 4 est réduit.

Le système de pare-chocs 2 comprend avantageusement un premier organe de rappel 16 de la barre d'activation 6, le premier organe de rappel 16 étant configuré pour faire passer la barre d'activation 6 de sa position d'activation vers sa position initiale. Dans le cas où la barre d'activation est montée pivotante, le premier organe de rappel 16 est configuré pour faire pivoter la barre d'activation 6 de la position d'activation vers sa position initiale. Le premier organe de rappel 16 est par exemple formé par au moins un ressort, de préférence un ressort de torsion. Dans le mode de réalisation décrit, la barre d'activation 6 est préchargée par l'intermédiaire d'au moins un pion 20 en contact avec une butée 22 dans la position initiale, le contact entre le pion 20 et la butée 22 étant assuré par un effort du premier organe de rappel 16 égal au premier seuil d'activation. Dans une telle configuration, la barre d'activation est configurée pour revenir à sa position initiale, notamment après une manœuvre de dégagement de l'engin agricole 1 par rapport à l'obstacle.

Par le vocable « manœuvre de désengagement », on entend un déplacement de l'engin agricole dans la direction opposée à la direction initiale d'avancement, de sorte que le contact entre la plaque de protection 4 et l'obstacle ayant causé le lancement de la séquence d'urgence soit rompu. Dans le cas d'un engin agricole autonome, la manœuvre de désengagement est réalisée automatiquement, et intégrée à la séquence d'urgence.

De manière analogue, le système de pare-chocs 2 comprend un deuxième organe de rappel 18 de la plaque de protection 4, le deuxième organe de rappel 18 étant configuré pour faire pivoter la plaque de protection 4 autour du premier axe, de sa position de contact vers sa position initiale. La plaque de protection est ainsi configurée pour revenir à sa position initiale, notamment à la suite d'une manœuvre de désengagement de l'engin agricole 1 par rapport à l'obstacle comme décrit ci-dessus. Le deuxième organe de rappel 18 est par exemple formé par au moins un ressort un ressort lame. La plaque de protection 4 est préchargée par l'intermédiaire d'au moins une chainette 26 en tension mécanique entre deux œillets 24 dans la position initiale, un œillet étant solidaire du châssis de l'engin agricole 1 et l'autre œillet 24 étant solidaire de la plaque de protection 4. Dans la position initiale, la tension mécanique de la chainette 26 est assurée par un effort du deuxième organe de rappel 18 égal au deuxième seuil d'activation.

On notera par ailleurs que l'invention n'est pas limitée aux modes de réalisations décrits précédemment. Il apparaîtra en effet à l'homme du métier que diverses modifications peuvent être apportées aux modes de réalisations décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en œuvre de l'enseignement qui vient de lui être divulgué.

## Revendications

1. Système de pare-chocs (2) pour une roue (3) d'un engin (1) agricole, notamment autonome, le système de pare-chocs (2) comprenant :
une plaque de protection (4) en liaison pivot par rapport à un châssis de l'engin (1) agricole selon un premier axe sensiblement parallèle à un axe de rotation de la roue (3) de l'engin (1) agricole, la plaque de protection (4) étant mobile entre une position initiale dans laquelle la plaque de protection (4) s'étend en avant et à distance de la roue (3) par rapport à une direction d'avancement de l'engin (1) agricole et une position de contact dans laquelle la plaque de protection (4) est en appui contre le pneu de la roue (3) ;
une barre d'activation (6) mobile entre une position initiale dans laquelle la barre d'activation (6) s'étend en avant et à distance de la plaque de protection (4) par rapport à la direction d'avancement de l'engin (1) agricole et une position d'activation ;
le système de pare-chocs (2) étant configuré de sorte que, dans le cas où la barre d'activation (6) entre en contact avec un obstacle et où l'obstacle exerce une force sur la barre d'activation (6) supérieure à un premier seuil, la barre d'activation (6) passe de sa position initiale vers sa position d'activation, la barre d'activation (6) actionnant au passage un organe de commande (8) configuré pour commander une séquence d'urgence de l'engin (1) agricole, comprenant notamment le freinage et l'arrêt automatique de l'engin (1) agricole, le système de pare-chocs (2) étant en outre configuré de sorte que, dans le cas où la plaque de protection (4) entre en contact avec l'obstacle et où l'obstacle exerce une force sur la plaque de protection (4) supérieure à un deuxième seuil, la plaque de protection (4) pivote autour du premier axe de sa position initiale vers sa position de contact.

2. Système de pare-chocs (2) selon la revendication 1, dans lequel la barre d'activation (6) est en liaison pivot par rapport à la plaque de protection (4) selon un deuxième axe sensiblement parallèle à l'axe de rotation de la roue (3), l'organe de commande (8) comprenant une came (10), un galet (12) et un interrupteur (14), la came (10) étant solidaire de la barre d'activation (6), et configurée de sorte que, lors du pivotement de la barre d'activation (6) de la position initiale à la position d'activation, un pivotement de la came (10) induise un déplacement du galet (12) en direction de l'interrupteur (14) de sorte à déclencher l'interrupteur (14) pour commander la séquence d'urgence de l'engin (1) agricole.

3. Système de pare-chocs (2) selon l'une quelconque des revendications précédentes, comprenant un premier organe de rappel (16) de la barre d'activation (6), le premier organe de rappel (16) étant configuré pour faire passer la barre d'activation (6) de sa position d'activation vers sa position initiale.

4. Système de pare-chocs (2) selon la revendication 3, dans lequel la barre d'activation (6) est préchargée par l'intermédiaire d'au moins un pion (20) en contact avec une butée (22) dans la position initiale, le contact entre le pion (20) et la butée (22) étant assuré par un effort de l'organe de rappel (16) égal au premier seuil d'activation.

5. Système de pare-chocs (2) selon l'une quelconque des revendications précédentes, comprenant un deuxième organe de rappel (18) de la plaque de protection (4), le deuxième organe de rappel (18) étant configuré pour faire pivoter la plaque de protection (4) autour du premier axe, de sa position de contact vers sa position initiale.

6. Système de pare-chocs (2) selon la revendication 5, dans lequel la plaque de protection (4) est préchargée par l'intermédiaire d'au moins une chainette (26) en tension mécanique entre deux œillets (24) dans la position initiale, un œillet (24) étant solidaire du châssis de l'engin (1) agricole 1 et l'autre œillet (24) étant solidaire de la plaque de protection (4).

7. Système de pare-chocs (2) selon l'une quelconque des revendications précédentes, dans lequel la plaque de protection (4) comprend une bordure en saillie dans une direction opposée à la direction d'avancement, la bordure étant configurée pour être en contact avec la roue (3) de l'engin (1) agricole dans la position de contact de la plaque de protection (4), la bordure délimitant en outre un logement configuré pour recevoir l'organe de commande (8).

8. Système de pare-chocs (2) selon l'une quelconque des revendications précédentes, dans lequel le premier seuil d'activation est d'au moins 15 N.

9. Système de pare-chocs (2) selon l'une quelconque des revendications précédentes, dans lequel le deuxième seuil d'activation est compris entre 1 et 40 fois le premier seuil d'activation.

10. Engin (1) agricole, notamment autonome, comprenant un châssis et une pluralité de roues (3), chaque roue (3) tournant autour d'un axe de rotation de sorte que l'engin (1) agricole se déplace selon une direction d'avancement, l'engin (1) agricole comprenant par ailleurs au moins un système de pare-chocs (2) selon l'une quelconque des revendications 1 à 9 recouvrant au moins partiellement une roue (3) de l'engin (1) agricole, chaque système de pare-chocs (2) étant en outre configuré pour commander une séquence d'urgence de l'engin (1) agricole, comprenant notamment le freinage et l'arrêt automatique de l'engin (1) agricole.
